(19) **Europäisches Patentamt**
**European Patent Office**
**Office européen des brevets**

(11) **EP 2 637 140 B1**

(12) **EUROPEAN PATENT SPECIFICATION**

(45) Date of publication and mention
of the grant of the patent:
**27.08.2014 Bulletin 2014/35**

(51) Int Cl.:
***G06T 7/00*** *(2006.01)*

(21) Application number: **13155916.3**

(22) Date of filing: **20.02.2013**

(54) **Method and apparatus for multi-label segmentation**

Verfahren und Vorrichtung für Multilabelsegmentierung

Procédé et appareil de segmentation multi-couche

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2012 EP 12305263
19.09.2012 EP 12306131**

(43) Date of publication of application:
**11.09.2013 Bulletin 2013/37**

(73) Proprietor: **Thomson Licensing
92130 Issy-les-Moulineaux (FR)**

(72) Inventors:
• **Schlosser, Markus
30177 Hannover (DE)**
• **Scheuermann, Bjoern
30952 Ronnenberg (DE)**
• **Rosenhahn, Bodo
30952 Ronnenberg (DE)**

(74) Representative: **Schmidt-Uhlig, Thomas
Deutsche Thomson OHG
European Patent Operations
Karl-Wiechert-Allee 74
30625 Hannover (DE)**

(56) References cited:
• **BJÖRN SCHEUERMANN ET AL: "SlimCuts:
GraphCuts for High Resolution Images Using
Graph Reduction", 25 July 2011 (2011-07-25),
ENERGY MINIMIZATION METHODS IN
COMPUTER VISION AND PATTERN
RECOGNITION, SPRINGER BERLIN
HEIDELBERG, BERLIN, HEIDELBERG, PAGE(S)
219 - 232, XP019162626, ISBN: 978-3-642-23093-6
* sections 2 and 3; figure 3 * * ***
• **TAESUP KIM ET AL: "Variable grouping for
energy minimization", COMPUTER VISION AND
PATTERN RECOGNITION (CVPR), 2011 IEEE
CONFERENCE ON, IEEE, 20 June 2011
(2011-06-20), pages 1913-1920, XP032038147,
DOI: 10.1109/CVPR.2011.5995645 ISBN:
978-1-4577-0394-2**
• **SALIM BEN CHAABANE ET AL: "Relevance of the
Dempster-Shafer evidence theory for image
segmentation", SIGNALS, CIRCUITS AND
SYSTEMS (SCS), 2009 3RD INTERNATIONAL
CONFERENCE ON, IEEE, PISCATAWAY, NJ,
USA, 6 November 2009 (2009-11-06), pages 1-4,
XP031627484, ISBN: 978-1-4244-4397-0**
• **Björn Scheuermann ET AL: "Feature Quarrels:
The Dempster-Shafer Evidence Theory for Image
Segmentation Using a Variational Framework" In:
"Field Programmable Logic and Application", 8
November 2010 (2010-11-08), Springer Berlin
Heidelberg, Berlin, Heidelberg, XP055064227,
ISSN: 0302-9743 ISBN: 978-3-54-045234-8 vol.
6493, pages 426-439, DOI:
10.1007/978-3-642-19309-5_33, * section 3; figure
2 ***

• **Björn Scheuermann ET AL: "Interactive Image Segmentation Using Level Sets and Dempster-Shafer Theory of Evidence" In: "Field Programmable Logic and Application", 1 May 2011 (2011-05-01), Springer Berlin Heidelberg, Berlin, Heidelberg, XP055064211, ISSN: 0302-9743 ISBN: 978-3-54-045234-8 vol. 6688, pages 656-665, DOI: 10.1007/978-3-642-21227-7_61, * section 2 ***

**Description**

The invention relates to a method and an apparatus for multi-label segmentation of an image or a sequence of images. More specifically, the invention refers to a method and an apparatus for multi-label segmentation of an image or a sequence of images using graph cuts, which is suitable for high resolution images or image sequences.

In the field of computer vision, discrete optimization using maximum flow algorithms has become very popular. This has been driven by the fact that many problems, such as image segmentation, stereo matching or shape matching, are formulated using probabilistic models like Markov random fields (MRF) or conditional random fields (CRF). The computation of the maximum a posteriori (MAP) solution for these models can be regarded as the discrete minimization of an energy function. Many algorithms in literature are able to efficiently compute an approximate solution of the given optimization problem. Under some assumptions, e.g. that the energy function is submodular, these algorithms are able to compute the exact minimum of the given energy function.

Research on solving discrete optimization problems using maximum flow / minimum cut algorithms for applications in computer vision can be divided into the following approaches:

　　**Augmenting paths:** For computer vision problems, the most widely used algorithm is the Boykov and Kolmogorov augmenting paths algorithm (BK-algorithm). This algorithm efficiently solves moderately sized 2D and 3D problems with low connectivity.

　　**Push-re-label:** Most parallelized maximum flow / minimum cut algorithms are based on the push-re-label scheme. These methods outperform the traditional BK-algorithm for huge and highly connected grid graphs. Special hardware is used to approximate the optimal solution.

　　**Grouping of variables / graph sparsification:** Besides the approaches to develop more efficient algorithms for the maximum flow / minimum cut problem, researchers are also trying to reduce the size of the labeling problem or the graph itself. One simple and widely used technique merges variables in the energy function into a smaller number of groups, e.g. superpixels. For example, in B. Scheuermann et al.: "Slimcuts: Graphcuts for high resolution images using graph reduction ", 8th International Conference on Energy Minimization Methods in Computer Vision and Pattern Recognition (EMMCVPR) (2011), pp. 219-232, an algorithm for graph sparsification is presented that does not change the optimal solution. The idea is to create a so called Slim Graph by merging nodes in the graph that do not change the maximum flow, meaning that these variables are guaranteed to have the same label in the minimum energy state.

　　**Multi-scale:** The idea of multi-scale methods for image labeling is to first solve the problem at low resolution using standard techniques. This can be interpreted as a grouping of the image into regular non-overlapping groups. The result of the low-resolution labeling is refined at the high-resolution in a following optimization step where most variables of the problem are fixed.

Unfortunately, in parallel to the improvement of discrete energy minimization algorithms, the size of single images and image sequences has increased significantly. Compared to standard benchmark images, which have an approximate size of 120.000 pixels, nowadays commercial cameras capture images with many more pixels, e.g. up to 20 million. Since most energy functions contain one discrete variable per pixel, e.g. energy functions for image segmentation or stereo matching, the minimization using maximum flow algorithms can be computationally extremely expensive. It has been shown that the given algorithms are not applicable if the data of the problem does not fit into the physical memory. Though more efficient energy minimization methods developed, the computational cost and memory requirements of these methods are still highly linear in the number of variables and terms of the energy function.

T. Kim et al: "Variable grouping for energy minimization", Conference on Computer Vision and Pattern Recognition (CVPR) (2011), pp. 1913-1920, describe an algorithm for energy minimization. An energy-aware method merges random variables to reduce the size of the energy to be minimized. The method examines the energy function to find groups of variables which are likely to take the same label in the minimum energy state and thus can be represented by a single random variable.

It is an object of the invention to propose an enhanced solution for multi-label segmentation of an image or a sequence of images, which has an improved performance.

According to the invention, a method for multi-label segmentation of an image comprises the steps of:

-　determining an energy function for the image;
-　grouping variables of the energy function for a homogeneous region of the image to a single variable based on an edge weight function;

- minimizing the energy function; and
- assigning labels to regions of the image based on the minimized energy function;

wherein Dempster's theory of evidence is used to determine which variables and/or which pixels of the image are grouped (11) and wherein the edge weight function is defined between neighboring pixels of the image based on their appearance similarity and their task specific similarity, the appearance similarity and the task specific similarity being combined using Dempster's rule of combination.

Accordingly, an apparatus configured to perform multi-label segmentation of an image comprises:

- an energy function determining block configured to determine an energy function for the image;
- a variable grouping block configured to group variables of the energy function for a homogeneous region of the image to a single variable based on an edge weight function;
- an energy function minimizer configured to minimize the energy function; and - a label assignment block configured to assign labels to regions of the image based on the minimized energy function

wherein the variable grouping block is configured to use Dempster's theory of evidence to determine which variables and/or which pixels of the image are grouped and wherein the edge weight function is defined between neighboring pixels of the image based on their appearance similarity and their task specific similarity, the appearance similarity and the task specific similarity being combined using Dempster's rule of combination.

The proposed method merges variables of the energy function to small sets of non-overlapping groups, so that each group can be represented by one single variable. For minimizing the energy function is a maximum flow algorithm is used. The solution according to the invention has the advantage that the general performance of maximum flow algorithms for image segmentation is improved and that the computational costs and memory requirements are dramatically reduced. In contrast to other approaches no special hardware is necessary to approximate the optimal solution.

Dempster's theory of evidence is used to determine which variables and/or which pixels of the image are grouped. For this purpose an edge weight function is defined between neighboring pixels of the image based on their appearance similarity and their task specific similarity. The appearance similarity and the task specific similarity are combined using Dempster's rule of combination.

For merging the task specific similarity and the appearance are combined using Dempster's theory of evidence to compute the basic believe if two neighboring variables should be merged. Furthermore, the size of the groups is not directly penalized in order to allow large groups of variables in homogeneous regions.

Preferably, two variables of the energy function are grouped if the maximum weight of all edges connected to the two variables is smaller than a threshold. Favorably, two variables of the energy function are also grouped if the value of the edge connecting the two variables or the maximum value of all edges connected to the two variables is smaller than the minimal internal difference of the two variables, which is defined as the maximum value of the minimal spanning tree plus a small value.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:

Fig. 1      shows an example of a variable grouping and a corresponding graph based on a new energy function,

Fig. 2      depicts image segmentation results for different approaches for variable grouping,

Fig. 3      shows a visual comparison of two examples for different approaches for variable grouping,

Fig. 4      visualizes a segmentation error for one image and different budgets,

Fig. 5      shows a first example of variable grouping for video segmentation,

Fig. 6      visualizes the isosurface of the segmentation of Fig. 5,

Fig. 7      shows a second example of variable grouping for video segmentation,

Fig. 8      visualizes the isosurface of the segmentation of Fig. 7,

Fig. 9      schematically illustrates a method according to the invention for multi-label image segmentation, and

Fig. 10    depicts an apparatus adapted to perform a method according to the invention for multi-label image segmentation.

The discrete energy $E\colon \mathcal{L}^n \to \mathbb{R}$ for the problem of binary image labeling addressed in this work can be written as the sum of unary $\varphi_i$ and pairwise functions $\varphi_{i,j}$

$$E(x) = \sum_{i \in \mathcal{V}} \varphi_i(x_i) + \sum_{(i,j) \in \mathcal{E}} \varphi_{i,j}(x_i, x_j)\,, \tag{1}$$

where $x$ is the labeling, $\nu$ corresponds to the set of all image pixels and $\varepsilon$ is the set of all edges between pixels in a defined neighborhood $\mathcal{N}$ (e.g. 4 or 8 neighborhood for images and 6 or 26 for image sequences). For the problem of binary image segmentation, the label set $\mathcal{L}$ consists of a foreground (*fg*) and a background (*bg*) label. The unary function $\varphi_i$ is given as the negative log likelihood using a standard Gaussian Mixture Model (GMM), defined as

$$\varphi_i(x_i) = -\log Pr(I_i \mid x_i = S)\,, \tag{2}$$

where **S** is either **fg** or **bg**. The pairwise function $\varphi_{i,j}$ takes the form of a contrast sensitive Ising model and is defined as

$$\varphi_{i,j}(x_i, x_j) = \gamma \cdot \mathrm{dist}(i,j)^{-1} \cdot [x_i \neq x_j] \cdot \exp(-\beta \|I_i - I_j\|^2)\,. \tag{3}$$

Here $I_i$ and $I_j$ describe the feature vectors of pixels *i* and *j*, e.g. RGB-colors. The parameter $\gamma$ specifies the impact of the pairwise function. Using the defined unary and pairwise functions, the energy (1) is submodular and can hence be represented by a graph. In this form, the global minimum of the energy can be computed with standard maximum flow algorithms.

To solve the labeling problem using maximum flow algorithms, the energy function needs to be represented by a graph. This can be achieved by defining the graph **G = (**$\nu_{\boldsymbol{G}}, \varepsilon_{\boldsymbol{G}}$**)** as follows: The set of vertices is simply the set of pixels unified with two special vertices: $\nu_{\boldsymbol{G}}$ = $\nu \cup$ {**S, T**}, where S denotes the source and T the sink. The set of edges consists of the set of all neighboring pixels plus an edge between each pixel and the source and sink respectively: $\varepsilon_{\boldsymbol{G}}$ = $\varepsilon \cup$ {(**p, S**), (**p, T**) | **p** $\in \nu$}. The capacities **c(e)** of each edge are defined analogously to Y. Boykov et al: "Interactive graph cuts for optimal boundary & region segmentation of objects in nd images" Proceedings of the Eighth International Conference On Computer Vision (ICCV-01) (2001), Vol. 1, pp. 105-112.

For the grouping of the variables the definitions given in T. Kim et al.: "Variable grouping for energy minimization", Conference on Computer Vision and Pattern Recognition (CVPR) (2011), pp. 1913-1920 are adapted to the notation as used herein. A variable grouping of graph **G** is a graph $G' = (\mathcal{V}'_G, \mathcal{E}'_G)$ with energy function **E'** produced by a surjective

map               $m_G \colon \mathcal{V}_G \to \mathcal{V}'_G$               and               the               edge               set

$\mathcal{E}'_G = \{(s,t) \in \mathcal{V}'_G \times \mathcal{V}'_G \mid \exists (i,j) \in \mathcal{E}_G \colon m_G(i) = s \text{ and } m_G(j) = \mathrm{t}\}$. . Thus, the energy function for a variable grouping **G'** reads:

$$E'(x) = \sum_{i \in \mathcal{V}} \varphi_i(\hat{x}_{m_G(i)}) + \sum_{(i,j) \in \mathcal{E}} \varphi_{i,j}(\hat{x}_{m_G(i)}, \hat{x}_{m_G(j)})\,, \tag{4}$$

where $\hat{\boldsymbol{x}}$ is the labeling of the variable grouping. Solving this energy function on top of the grouping can be seen to correspond to the existing practice of using superpixels as a preprocessing step and defining the energy minimization problem on superpixels instead of pixels. Since most superpixels are directly derived from image properties, they perform poorly because the properties of the energy function, e.g. the unary term, are ignored.

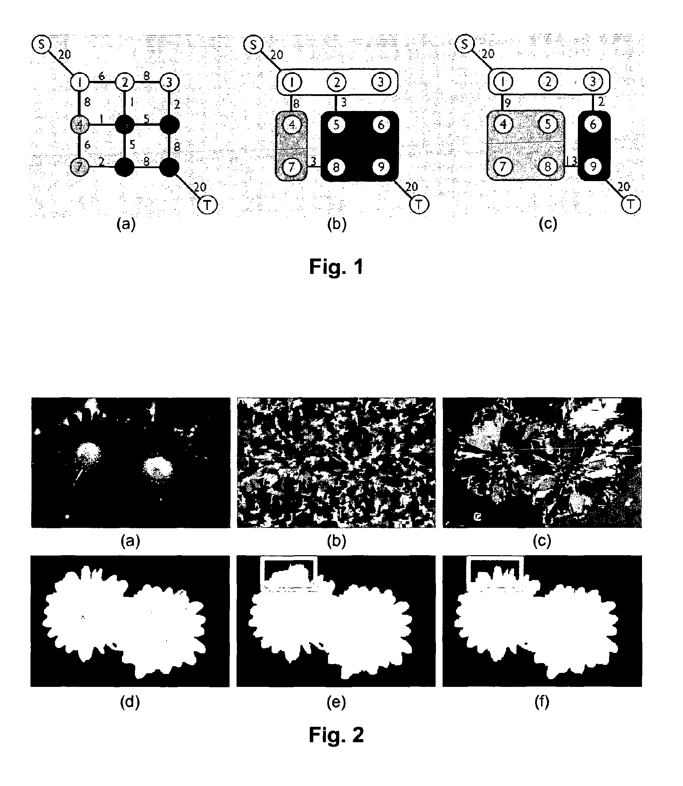

Fig. 1 shows an example of a variable grouping and the corresponding graph based on the proposed energy function. The nodes from the original graph illustrated in Fig. 1(a) are merged into three different groups of variables, as depicted in Fig. 1(b) and Fig. 1(c). The weights of the new graph are changed according to the new energy function. A good grouping as in Fig. 1(b) does not change the MAP solution of the original graph.

In the following Dempster's theory of evidence, also called evidence theory, shall be briefly reviewed. This theory will later be used to define a similarity weight for two neighboring variables.

Earlier works on image segmentation using Dempster's theory of evidence have shown that it can be advantageous. The evidence theory is often described as a generalization of the Bayesian theory to be able to represent inaccuracy and uncertainty information at the same time. The basic idea of the evidence theory is to define a so called mass function on a hypotheses set $\Omega$. The hypotheses set $\Omega$ shall be composed of $n$ single mutually exclusive subsets $\Omega_i$, symbolized by $\Omega = \{\Omega_1, \Omega_2, \dots, \Omega_n\}$. In order to express a degree of confidence for each element $A$ of the power set $\wp(\Omega)$, an elementary mass function $m(A)$ is associated with it to indicate all confidences assigned to this proposition. The mass function $m$ is defined by:

$$m: \wp(\Omega) \to [0,1] \qquad (5)$$

and must fulfill the following conditions:

(i) $m(\theta) = 0$
(ii)

$$\sum_{A_n \subseteq \Omega} m(A_n) = 1 . \qquad (6)$$

The quantity $m(A)$ is interpreted as the belief strictly placed on hypothesis $A$. This quantity differs from a Bayesian probability function by the totality of the belief which is distributed not only on the simple classes, but also on the composed classes. This modeling shows the impossibility to dissociate several hypotheses. This characteristic is the principal advantage of the evidence theory, but it also represents the principal difficulty of this method.

From the basic belief assignment $m$, a belief function $Bel: \wp(\Omega) \to [0,1]$ can be defined as

$$Bel(A) = \sum_{A_n \subseteq A} m(A_n) , \qquad (7)$$

with $A_n \in \wp(\Omega)$. It is interpreted as the total belief committed to hypothesis $A$, that is, the mass of $A$ itself plus the mass attached to all subsets of $A$. $Bel(A)$ then is the total positive effect the body of evidence has on a value being in $A$. It quantifies the minimal degree of belief of the hypothesis $A$.

A particular characteristic of the Dempster-Shafer evidence theory (one which makes it different from probability theory) is that if $Bel(A) < 1$, then the remaining evidence $1 - Bel(A)$ needs not necessarily refute $A$ (i.e. support its negation $\overline{A}$). That is, the so called additivity rule $Bel(A) + Bel(\overline{A}) = 1$ does not hold.

The Dempster-Shafer theory has an important operation, Dempster's rule of combination, for pooling of evidence from a variety of features. This rule aggregates two independent bodies of evidence defined within the same frame of discernment into one body of evidence. Let $m_1$ and $m_2$ be two mass functions associated to such independent bodies. The new body of evidence is defined by

$$m(A) = m_1(A) \otimes m_2(A) = \frac{\displaystyle\sum_{B \cap C = A} m_1(B)m_2(C)}{1 - \displaystyle\sum_{B \cap C = \emptyset} m_1(B)m_2(C)} . \qquad (8)$$

Dempster's rule of combination computes a measure of agreement between two bodies of evidence concerning various propositions from a common frame of discernment. Since Dempster's rule of combination is associative, information coming from more than two feature channels can be combined.

In the following the details of the proposed approach are described and the similarities and differences to existing approaches are discussed. Consider a score function w measuring how similar two connected nodes are, such that small values indicate a strong similarity and large values dissimilarity. The idea of grouping nodes is as follows: (i) the first step is to sort all edges of the graph in ascending order so that edges with a small weight come first, (ii) for each edge in the list nodes that fulfill a given constraint are merged until the problem has been sufficiently reduced. The efficient graph-based segmentation method, proposed in P.F. Felzenszwalb et al.: "Efficient graph-based image segmentation", Int. J. Comput. Vis. Vol. 59 (2004), pp. 167-181, works exactly like this. As the merging constraint, they used a global criterion, balancing the size of the group and its internal coherence. Algorithm 1 presented below is identical to the solution P.F. Felzenszwalb et al. with the notation as used herein. The merging constraint used by P.F. Felzenszwalb et al. is based on the so called internal difference

$$\mathrm{Int}(C) = \max_{(i,j) \in \mathrm{MST}(C,\mathcal{E})} w_{ij}\,, \qquad (9)$$

where MST($C,\varepsilon$) is the minimum-weight spanning tree within the group **C** with a set of edges $\varepsilon$. **Int(C)** is small if the nodes in group **C** are similar according to the defined edge weights. To decide whether two groups are merged, the algorithm compares the weight of the connecting edge between the two groups **C₁** and **C₂** and compares it with the internal difference **Int(Cᵢ)** of both groups. For the present goal of grouping variables for energy minimization, this criterion makes sense since the intention is to build groups of variables that are similar and to agree about their labeling.

For the decision, P.F. Felzenszwalb et al. use the function **MInt(C₁,C₂)** defined as

$$\mathrm{MInt}(C_1, C_2) = \min\{\mathrm{Int}(C_1) + \tau(C_1), \mathrm{Int}(C_2) + \tau(C_2)\}\,, \qquad (10)$$

where $\tau(C) = \frac{k}{|C|}$ penalizes the size of a group based on a free parameter **k**. According to Algorithm 1 an edge $w_{i,j} \in \varepsilon_g$ has to fulfill the equation

$$w_{i,j} \le \mathrm{MInt}(C_1, C_2) \qquad (11)$$

to be merged. This graph based method is very efficient and easy to implement in $O(|\varepsilon_g||\log|\varepsilon_g|)$ time and memory.

| Algorithm 1: Dempster-Shafer based Variable Grouping | |
| --- | --- |
| 1: | ($\nu'_g$, *m*) = DempsterShaferGrouping(G,φ, w) |
| 2: | **Input**: |
| 3: | $G = (\nu_g, \varepsilon_g)$ // an instance of the graph |
| 4: | $\varphi_i$, $\varphi_{i,j}$ // node and edge energies |
| 5: | $\omega : \varepsilon_g \to$ R // dissimilarity weights |
| 6: | **Output**: |
| 7: | $\nu g'$ // set of grouped variables |
| 8: | *m* // surjective map |
| 9: | **Algorithm**: |
| 10: | $\nu_g{}' \leftarrow \nu_g$, $\varepsilon_g{}' \leftarrow \varepsilon_g$ |
| 11: | $m \leftarrow \{(i, i) \mid i \in \nu_g\}$ |
| 12: | $\pi \leftarrow \mathrm{sort}(\varepsilon_g, \omega)$ {sort weights in ascending order} |
| 13: | **for** e = 1, ... , $|\pi|$ **do** |
| 14: | $(i, j) \leftarrow \pi_e$ |
| 15: | **if** *m(i)* = *m(j)* **then** |
| 16: | **continue** {already merged} |
| 17: | **end if** |

(continued)

| Algorithm 1: Dempster-Shafer based Variable Grouping |
| --- |
| 18:          **if** $\omega_{ij}$ fulfills given constraint **then** |
| 19:          merge $C_j$ and $C_j$ in m, $vg'$ |
| 20:          **end if** |
| 21:          **end for** |

The grouping resulting from the algorithm by P.F. Felzenszwalb et al. can be described as compact since the free parameter $k$ in $\tau(C)$ penalizes the size of a group. In the above cited work by T. Kim et al. the goal was to produce compact groups of variables that will have the same label according to the minimum energy state. Therefore, the weight functions are based on the unary or pairwise potentials of the energy function. In contrast the present goal is to group as many variables as possible that are likely to have the same label according to the minimum energy state and the ground truth labeling.

To allow big groups of variables, e.g. in homogeneous regions, new merging constraints based on the maximum weight of any outgoing edge are proposed. Instead of using a global criterion, balancing the size and the internal coherence of a group all nodes that are connected by a sufficiently small edge are merged. For example, one could use the function $w_{i,j} \leq W$ to merge all nodes connected by an edge smaller than the parameter **W**. As will later be shown with reference to the experiments this simple constraint does not produce groups that agree with either the minimum energy state or the ground truth. To produce groups of homogeneous variables, two new merging constraints based on the local edge weights of two nodes are proposed. The first constraint takes into account the maximum value of any edge connected to two variables. Therefore, two components connected by the edge $w_{i,j}$ are grouped if

$$w_{max}(i,j) := \max_{l,k|(l,j),(i,k)\in \mathcal{E}_{\mathcal{G}}} (w_{lj}, w_{ik}) \leq W_1 \qquad (\text{MAXEDGE}). \qquad (12)$$

This means that two nodes are merged if all weights adjacent to **(i, j)**, including the edge $w_{i,j}$, are smaller than the parameter $W_1$, which indicates that these nodes are somewhat similar. In the experiments the threshold $W_1$ is computed according to the partition of the edge weights. The idea of the proposed constraint is to have large groups of variables in all images regions except the borders of the objects. As a second constraint also the global criterion based on the minimum-weight spanning tree and the size dependent function $\tau$ are included, to balance the size of a group and its internal coherence, to allow somehow small compact groups of variables in regions that do not fulfill the MAXEDGE constraint, e.g. at the borders of an object. Thus, the decision is made according to

$$\text{MAXEDGE} \quad \text{or} \; w_{ij} \leq \text{MInt}(C_i, C_j) \qquad (\text{COMPACTEDGE}). \qquad (13)$$

The differences of the proposed merging functions are discussed later with regard to the experiments.

Three classes of weight functions $w_{i,j}$ are considered. The first two are well known weight functions that shall serve as comparison with the proposed weight function.

P.F. Felzenszwalb et al. take the pixel difference as the grouping weight. If $I_i$ and $I_j$ are the feature vectors of pixels $i$ and $j$ in the image, the weight is set to the norm of the difference:

$$w_{ij}^{FH} = ||I_i - I_j||. \qquad (14)$$

In the experiments on image segmentation it will be shown that this method is not performing comparably, since the properties from the energy minimization problem are ignored.

Kim et al. have proposed an approach very similar to the approach by P.F. Felzenszwalb et al. and to the present approach. For comparison with the proposed method the defined UNARYDIFF weight function is used, because in the experiments this weight function outperformed the others for the problem of binary image segmentation. The weight is defined as

$$w_{ij}^{ud} = ||\varphi_i - \varphi_j||, \qquad (15)$$

using the unary terms of the defined energy function. The weight describes the disagreement of the states between two variables and measures the task-specific similarity of two neighboring nodes.

The Dempster-Shafer weighting function proposed herein includes the unary functions $\varphi_i$ and $\varphi_j$ and the pairwise terms $\varphi_{ij}$. Thereby the image information that are included in the pairwise function and the information included in the unary term, typically derived from a discriminative classifier, are taken into account. Hence the proposed weight function can be seen as a combination of the two earlier presented ones, which combines the image features with the task specific unary functions. To combine both types of information Dempster's theory of evidence is used. Therefore, the weights are defined based on the unary and pairwise functions

$$w_{ij}^{pairwise} = \varphi_{ij}(x_i, x_j) \qquad (16)$$

and

$$w_{ij}^{unary} = ||\varphi_i - \varphi_j||. \qquad (17)$$

Since the co-domains of the weights are different, they are individually normalized to the co-domain [0,1]. That means for two variables with a similar feature vector $w_{ij}^{pairwise} \approx 1$. For $w_{ij}^{unary}$ it means $w_{ij}^{unary} \approx 0$ if the negative log likelihood for two variables is similar for both states. Based on these weight functions, two mass functions are defined over the hypothesis set $\Omega = \{\Omega_1, \Omega_2\}$, where $\Omega_1$ means that the two variables are similar and $\Omega_2$ that they are dissimilar:

$$
\begin{aligned}
m_1(\Omega_1) &= b_1 \cdot w_{ij}^{pairwise} \quad , m_1(\Omega_2) = b_1 \cdot \left(1 - w_{ij}^{pairwise}\right), \\
m_1(\emptyset) &= 0 \quad , m_1(\Omega) = b_1, \\
m_2(\Omega_1) &= b_2 \cdot \left(1 - w_{ij}^{unary}\right) \quad , m_2(\Omega_2) = b_2 \cdot w_{ij}^{unary}, \\
m_2(\emptyset) &= 0 \quad , m_2(\Omega) = b_2,
\end{aligned} \qquad (18)
$$

where $b_l$ describes the believe that is put on the different information sources. In all experiments presented below the believe is equally weighted with $b_1 = b_2 = 0.5$. The two mass functions are now fused with Dempster's rule of combination (8) and the weights are defined as:

$$
\begin{aligned}
w_{ij}^{DS} &= 1 - Bel(\Omega_1) = 1 - m(\Omega_1) \\
&= 1 - \left( \frac{m_1(\Omega_1) \cdot m_2(\Omega_1) + m_1(\Omega_1) \cdot m_2(\Omega) + m_1(\Omega) \cdot m_2(\Omega_1)}{1 - (m_1(\Omega_1) \cdot m_2(\Omega_2) + m_1(\Omega_2) \cdot m_2(\Omega_1))} \right). \quad (19)
\end{aligned}
$$

Since Dempster's rule of combination is associative, other information sources can be easily included and combined with the proposed mass functions, e.g. the user initialization, the optical flow in video sequences or appearance information of an object.

Fig. 2 depicts the image segmentation results obtained with different approaches for variable grouping. Figs. 2(a) and (d) show the original image and the corresponding MAP segmentation result, respectively. Figs. 2(b) and (e) depict the variable grouping of Kim et al. with a budget of 1% and the corresponding segmentation result. Finally, Figs. 2(c) and (f) show the variable grouping proposed herein (COMPACTEDGE) with a budget of 1% and the corresponding segmentation result.

The proposed grouping allows to compute an approximate segmentation. However, since the resulting graph for the energy minimization is much smaller the segmentation result differs from the original MAP solution. The proposed algorithm can be quantified using three performance measures: i) the segmentation quality with respect to the ground truth solution, ii) the ratio of runtimes solving the MAP-problem (including the time for the grouping), and iii) the minimum segmentation error of a grouping. In the following the three measures are described in detail.

Segmentation error: The segmentation error is defined as the ratio between the number of misclassified pixels and the number of pixels in unclassified regions:

$$R_{se}(x) = \frac{\sum_{i \in \mathcal{V}_{\mathcal{G}}}[x_i \neq x_i^{gt}]}{\text{no. unclassified pixels}} , \qquad (20)$$

where $x^{gt}$ is the ground truth labeling.

**Minimum segmentation error:** Another measure to quantify the quality of a grouping is given by the minimum segmentation error:

$$R_{mse}(x) = \sum_{i \in \mathcal{V}_{\mathcal{G}}'} \min \left( \sum_{j \in m_{\mathcal{V}_{\mathcal{G}}}^{-1}(i)} [x_j^{gt} = fg], \sum_{j \in m_{\mathcal{V}_{\mathcal{G}}}^{-1}(i)} [x_j^{gt} = bg] \right) . \qquad (21)$$

It counts the minimum number of misclassified pixels by an optimal segmentation.

**Ratio of runtimes:** To compute the ration of runtimes the time to compute the grouping and to solve the reduced problem is compared with the time to solve the original problem.

The proposed method was evaluated using small scale images of the Microsoft segmentation benchmark available at http://research.microsoft.com/en-us/um/cambridge/projects/visio nimagevideoediting/segmentation/grabcut.htm and http://www.eecs.berkeley.edu/Research/Projects/CS/vision/groupi ng/segbench/ as well as large scale images with up to 26 million pixels. For the problem of binary video segmentation video sequences from the KTH action dataset available at http://www.nada.kth.se/cvap/actions/ and videos provided by Sand and Teller at http://http:/rvsn.csail.mit.edu/pv/ were used. In all experiments the same energy function as proposed by Blake et al.: "Interactive image segmentation using an adaptive gmmrf model", European Conference on Computer Vision (ECCV) (2004), pp. 428-441, and the same set of parameters were used. The experiments were run on a MacBook Pro with 2.4 GHz Intel Core i5 processor and 4GB Ram. For all experiments the proposed algorithm was compared with the approaches of P.F. Felzenszwalb et al. and Kim et al.

Small-scale Images: Table 1 shows the evaluation of the proposed algorithm on the Microsoft segmentation benchmark in comparison to the works of P.F. Felzenszwalb et al. (FH-algorithm) and Kim et al. (UNARYDIFF). All values are averaged over 50 benchmark images using stroke (lasso) initializations. It can be observed that the combination of Dempster's theory of evidence and the proposed constraint has a smaller average segmentation error with an even smaller budget. The small minimum segmentation error using the MAXEDGE constraint highlights that the idea to group large homogeneous regions to one single variable is advantageous and that the proposed weights based on Dempster's theory of evidence reliably find those regions. In combination with small groups at the objects boundaries the proposed COMPACTEDGE constraint outperforms the existing approaches.

Table 1

| Method | Avg. budget | Avg. $R_{mse}(x)$ | Avg. $R_{se}(x)$ |
|---|---|---|---|
| full MAP (reference) | 100 (100) | 0 (0) | 0.075 (0.058) |
| FH-algorithm | 10.22 (10.22) | 209.74 (209.74) | 0.074 (0.063) |
| UNARYDIFF | 10.72 (10.84) | 255.1 (219.08) | 0.073 (0.065) |
| MAXEDGE | 47.72 (15.21) | 58.42 (4.21) | 0.069 (0.058) |
| COMPACTEDGE | 6.25 (5.00) | 321.5 (63.52) | 0.061 (0.058) |

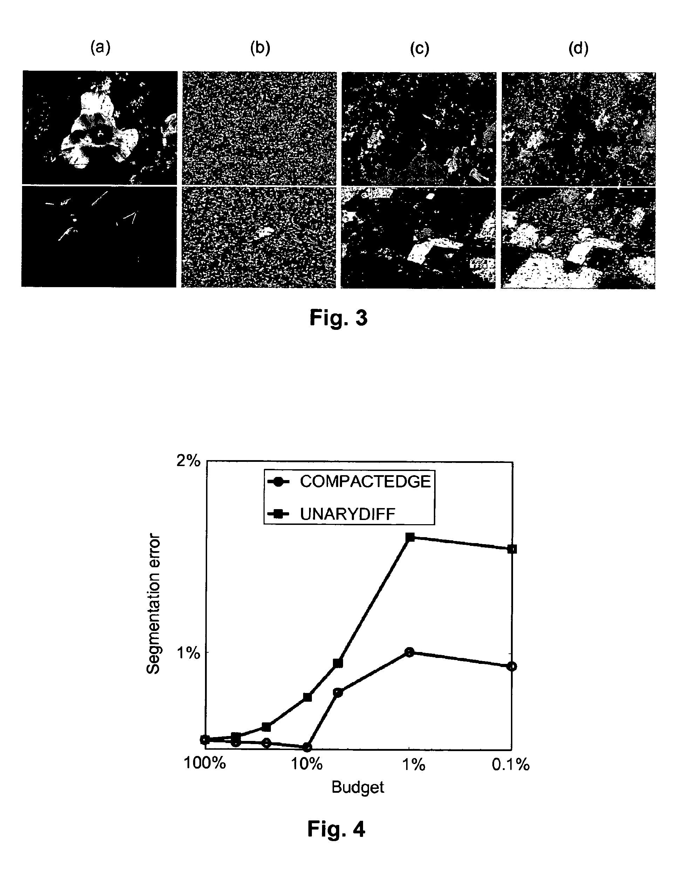

Fig. 3 shows a visual comparison of the different approaches. Fig. 3(a) depicts the original images, Fig. 3(b) depicts the variable grouping using the approach by Kim et al., Fig. 3(c) shows the results of the proposed method using MAXEDGE, and Fig. 3(d) depicts the results of the proposed method using COMPACTEDGE. In contrast to the approach by Kim et al., where the grouping produces superpixels that are comparable in size, the methods proposed herein group large homogeneous regions to single variables.

**High-resolution images:** To evaluate the segmentation quality and the possible speedup of the proposed method large-scale images with up to 20MP were used, which were down-sampled to several image-sizes. Similar to the experiments on small-scale images and video sequences the difference in segmentation quality is small and the reduction of runtime is dramatic for large images. As indicated before the BK-algorithm is inefficient and unusable if the graph does not fit into the physical memory. For those large MAP inference problems the ratio of runtime was approximately 0.08 using a budget of 5%. Due to the limitations of the BK-algorithm the proposed method greatly extends its applications.

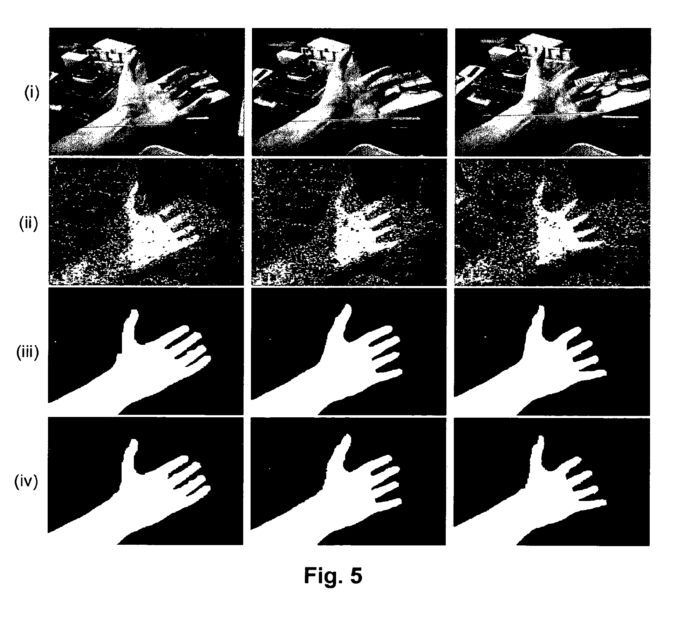

**Video-sequences:** The proposed algorithm can also be applied to group variables for the problem of video segmentation. To evaluate the performance of the proposed method different video-sequences were segmented, as illustrated in Figs. 5 to 8.

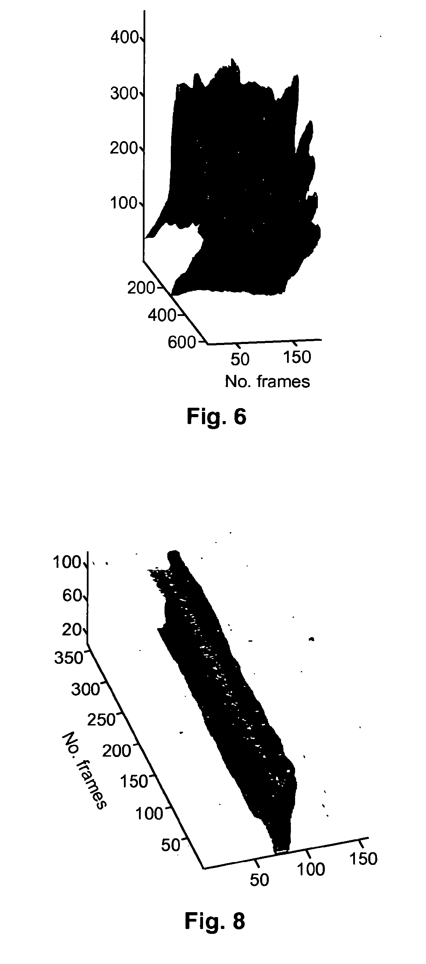

The columns in Fig. 5 correspond to the frames 5, 25 and 38 of a hand sequence. The first row (i) shows the original frames, the second row (ii) the variable grouping with the proposed algorithm. The third row (iii) depicts the segmentation results solving the full MAP, the fourth row (iv) the segmentation results solving the approximated MAP. The segmentation results are almost identical even if the approximated solution used a Budget of 5%. The ratio of runtime for this example is $\approx 0.1$. Fig. 6 visualizes the isosurface of the segmentation.

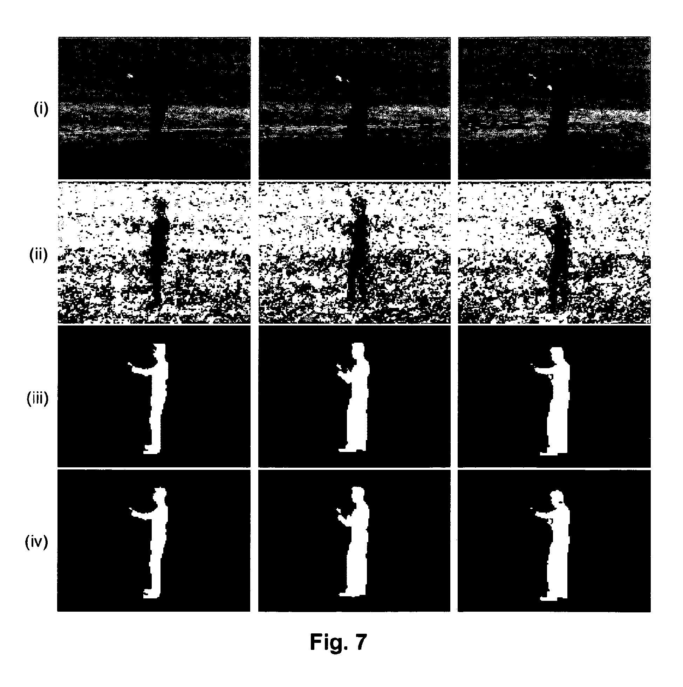

The columns in Fig. 7 correspond to the frames 10, 220 and 350 of a boxing sequence. The first row (i) shows the original frames, the second row (ii) the variable grouping with the proposed algorithm. The third row (iii) depicts the segmentation results solving the full MAP, the fourth row (iv) the segmentation results solving the approximated MAP. The segmentation results are almost identical even if the approximated solution used a Budget of 10%. The ratio of runtime for this example is $\approx 0.18$. Fig. 8 visualizes the isosurface of the segmentation.

It can be seen from the figures that the proposed algorithm achieves a similar segmentation as the full MAP solution with a much smaller budget and a dramatic reduction of runtime. For example, for the hand video in Fig. 5 (200 frames) the number of variables was reduced from 69.1 million to 3.5 million. For comparison of the results the full MAP solution was only computed for 40 frames since solving the full MAP problem for 100 frames was not possible due to memory reasons. The full MAP problem for the KTH-sequence shown in Fig. 7 has 7 million variables and the results shown use a budget of approximately 10%, resulting in 0.7 million variables with a comparable segmentation result.

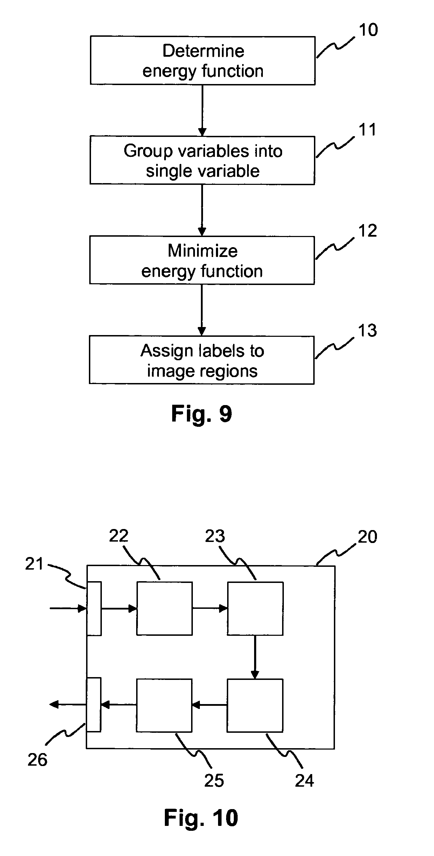

Fig. 9 schematically illustrates a method according to the invention for multi-label image segmentation. In a first step an energy function is determined 10 for the image. Variables of the energy function are then grouped 11 to a single variable for a homogeneous region of the image based on an edge weight function. Dempster's theory of evidence is used to determine which variables and/or which pixels of the image are grouped 11. The edge weight function is defined between neighboring pixels of the image based on their appearance similarity and their task specific similarity. The appearance similarity and the task specific similarity are combined using Dempster's rule of combination. Subsequently the energy function is minimized 12 and labels are assigned 13 to regions of the image based on the minimized energy function.

An apparatus 20 adapted to perform a method according to the invention for multi-label image segmentation is schematically depicted in Fig. 10. The apparatus 20 comprises an energy function determining block 22 for determining 10 an energy function for an image that is received via an input 21. A variable grouping block 23 groups 11 variables of the energy function to a single variable for a homogeneous region of the image based on an edge weight function. Dempster's theory of evidence is used to determine which variables and/or which pixels of the image are grouped 11. The edge weight function is defined between neighboring pixels of the image based on their appearance similarity and their task specific similarity. The appearance similarity and the task specific similarity are combined using Dempster's rule of combination. An energy function minimizer 24 minimizes 12 the energy function so that a label assignment block 25 is able to assign 13 labels to regions of the image based on the minimized energy function. Preferably the different blocks are implemented as microprocessors. Of course, two or more of the blocks may likewise be combined into a single processing block. The assigned labels or the image with its assigned labels are made available for further processing via an output 26.

**Claims**

**1.** A method for multi-label segmentation of an image, the method comprising:

    - determining (10) an energy function for the image;

- grouping (11) variables of the energy function for a homogeneous region of the image to a single variable based on an edge weight function;
- minimizing (12) the energy function; and
- assigning (13) labels to regions of the image based on the minimized energy function;

**characterized in that** Dempster's theory of evidence is used to determine which variables and/or which pixels of the image are grouped (11) and **in that** the edge weight function is defined between neighboring pixels of the image based on their appearance similarity and their task specific similarity, the appearance similarity and the task specific similarity being combined using Dempster's rule of combination.

2. The method according to claim 1, wherein the energy function is minimized (12) using a maximum flow algorithm.

3. The method according to claim 1 or 2, wherein two variables of the energy function are grouped (11) if the maximum weight of all edges connected to the two variables is smaller than a threshold.

4. The method according to claim 3, wherein two variables of the energy function are also grouped (11) if the value of the edge connecting the two variables or the maximum value of all edges connected to the two variables is smaller than the minimal internal difference of the two variables.

5. The method according to claim 4, **wherein** the minimal internal difference of the two variables is defined as the maximum value of the minimal spanning tree plus a small value.

6. An apparatus (29) configured to perform multi-label segmentation of an image, the apparatus (20) comprising:

- an energy function determining block (22) configured to determine (10) an energy function for the image;
- a variable grouping block (23) configured to group (11) variables of the energy function for a homogeneous region of the image to a single variable based on an edge weight function;
- an energy function minimizer (24) configured to minimize (12) the energy function; and
- a label assignment block (25) configured to assign (13) labels to regions of the image based on the minimized energy function;

**characterized in that** the variable grouping block (23) is configured to use Dempster's theory of evidence to determine which variables and/or which pixels of the image are grouped (11) and **in that** the edge weight function is defined between neighboring pixels of the image based on their appearance similarity and their task specific similarity, the appearance similarity and the task specific similarity being combined using Dempster's rule of combination.

**Patentansprüche**

1. Verfahren für die Multi-Label-Segmentierung eines Bilds, wobei das Verfahren umfasst:

- Bestimmen (10) einer Energiefunktion für das Bild;
- Gruppieren (11) von Variablen der Energiefunktion für ein homogenes Gebiet des Bilds zu einer einzelnen Variablen auf der Grundlage einer Kantengewichtsfunktion;
- Minimieren (12) der Energiefunktion; und
- Zuweisen (13) von Labels zu Gebieten des Bilds auf der Grundlage der minimierten Energiefunktion;

**dadurch gekennzeichnet, dass** zur Bestimmung, welche Variablen und/oder welche Pixel des Bilds gruppiert werden (11), die Dempster-Evidenztheorie verwendet wird, und dass die Kantengewichtsfunktion zwischen benachbarten Pixeln des Bilds auf der Grundlage ihrer Ähnlichkeit der Erscheinung und ihrer aufgabenspezifischen Ähnlichkeit definiert wird, wobei die Ähnlichkeit der Erscheinung und die aufgabenspezifische Ähnlichkeit unter Verwendung der Dempster-Kombinationsregel kombiniert werden.

2. Verfahren nach Anspruch 1, **wobei** die Energiefunktion unter Verwendung eines Maximalflussalgorithmus minimiert wird (12).

3. Verfahren nach Anspruch 1 oder 2, **wobei** zwei Variablen der Energiefunktion gruppiert werden (11), wenn das maximale Gewicht aller mit den zwei Variablen verbundenen Kanten kleiner als ein Schwellenwert ist.

4. Verfahren nach Anspruch 3, **wobei** zwei Variable der Energiefunktion ebenfalls gruppiert werden (11), wenn der Wert der Kante, die die zwei Variablen verbindet, oder der Maximalwert aller mit den zwei Variablen verbundenen Kanten kleiner als die minimale interne Differenz der zwei Variablen ist.

5. Verfahren nach Anspruch 4, **wobei** die minimale interne Differenz der zwei Variablen als der Maximalwert des minimalen Spannbaums zuzüglich eines kleinen Werts definiert ist.

6. Vorrichtung (29), die zum Ausführen einer Multi-Label-Segmentierung eines Bilds konfiguriert ist, wobei die Vorrichtung (20) umfasst:

   - einen Energiefunktions-Bestimmungsblock (22), der dafür konfiguriert ist, eine Energiefunktion für das Bild zu bestimmen (10) ;
   - einen Variablengruppierungsblock (23), der dafür konfiguriert ist, Variablen der Energiefunktion für ein homogenes Gebiet des Bilds auf der Grundlage der Kantengewichtsfunktion zu einer einzelnen Variablen zu gruppieren (11);
   - eine Energiefunktions-Minimierungseinrichtung (24), die dafür konfiguriert ist, die Energiefunktion zu minimieren (12); und
   - einen Label-Zuweisungsblock (25), der dafür konfiguriert ist, Gebieten des Bilds auf der Grundlage der minimierten Energiefunktion Label zuzuweisen (13);

   **dadurch gekennzeichnet, dass** der Variablengruppierungsblock (23) dafür konfiguriert ist, die Dempster-Evidenztheorie zu verwenden, um zu bestimmen, welche Variablen und/oder welche Pixel des Bilds gruppiert werden (11), und dass die Kantengewichtsfunktion zwischen benachbarten Pixeln des Bilds auf der Grundlage ihrer Ähnlichkeit der Erscheinung und ihrer aufgabenspezifischen Ähnlichkeit definiert wird, wobei die Ähnlichkeit der Erscheinung und die aufgabenspezifische Ähnlichkeit unter Verwendung der Dempster-Kombinationsregel kombiniert werden.

## Revendications

1. Un procédé de segmentation multi-label d'une image, le procédé comprenant :

   - la détermination (10) d'une fonction d'énergie pour l'image ;
   - le regroupement (11) des variables de la fonction d'énergie pour une région homogène de l'image en une variable unique sur une fonction de pondération de bord ;
   - la minimisation (12) de la fonction d'énergie ; et
   - l'attribution (13) de labels à des régions de l'image selon la fonction d'énergie minimisée ;

   **caractérisée en ce que** la théorie de l'évidence de Dempster est utilisée pour déterminer quels variables et/ou quels pixels de l'image sont regroupés (11) et **en ce que** la fonction de pondération de bord est définie entre les pixels avoisinants de l'image selon leur similarité d'apparence et leur similarité propre à la tâche, la similarité d'apparence et la similarité propre à la tâche étant associées à l'aide de la règle d'association de Dempster.

2. Le procédé selon la revendication 1, **dans lequel** la fonction d'énergie est minimisée (12) en utilisant un algorithme de débit maximum.

3. Le procédé selon la revendication 1 ou 2, **dans lequel** deux variables de la fonction d'énergie sont regroupées (11) si la pondération maximale de tous les bords connectés aux deux variables est inférieure à un seuil.

4. Le procédé selon la revendication 3, **dans lequel** deux variables de la fonction d'énergie sont aussi regroupées (11) si la valeur du côté connectant les deux variables ou la valeur maximale de tous les côtés connectés aux deux variables est inférieure à la différence interne minimale des deux variables.

5. Le procédé selon la revendication 4, **dans lequel** la différence interne minimale des deux variables est définie comme valeur maximale de l'arbre maximal minimum plus une valeur faible.

6. Un appareil (29 configuré pour effectuer la segmentation multi-label d'une image, l'appareil (20) comprenant :

   - un bloc de détermination de fonction d'énergie (22) configuré pour déterminer (10) une fonction d'énergie pour l'image ;
- un bloc de regroupement de variables (23) configuré pour regrouper (11) des variables de la fonction d'énergie pour une région homogène de l'image en une variable unique selon une fonction de pondération de bord ;
- un minimiseur de la fonction d'énergie (24) configuré pour minimiser (12) la fonction d'énergie ; et
- un bloc d'attribution de labels (25) configuré pour attribuer (13) des labels à des régions de l'image selon la fonction d'énergie minimisée ;

**caractérisée en ce que** le bloc de regroupement de variables (23) est configuré pour utiliser la théorie de l'évidence de Dempster pour déterminer quelles variables et/ou quels pixels de l'image sont regroupés (11) et **en ce que** la fonction de pondération de bord est définie entre les pixels avoisinants de l'image selon leur similarité d'apparence et leur similarité propre à la tâche, la similarité d'apparence et la similarité propre à la tâche étant associées à l'aide de la règle d'association de Dempster.

**Fig. 1**

**Fig. 2**

(a)    (b)    (c)    (d)

**Fig. 3**

**Fig. 4**

**Fig. 5**

**Fig. 6**

**Fig. 8**

**Fig. 7**

```
┌─────────────────────┐
│     Determine       │      10
│   energy function   │
└─────────────────────┘
          │
          ▼
┌─────────────────────┐
│ Group variables into│      11
│   single variable   │
└─────────────────────┘
          │
          ▼
┌─────────────────────┐
│      Minimize       │      12
│   energy function   │
└─────────────────────┘
          │
          ▼
┌─────────────────────┐
│   Assign labels to  │      13
│    image regions    │
└─────────────────────┘
```

**Fig. 9**

**Fig. 10**

## EP 2 637 140 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. SCHEUERMANN et al.** Slimcuts: Graphcuts for high resolution images using graph reduction. *8th International Conference on Energy Minimization Methods in Computer Vision and Pattern Recognition (EMMCVPR),* 2011, 219-232
- **T. KIM et al.** Variable grouping for energy minimization. *Conference on Computer Vision and Pattern Recognition (CVPR),* 2011, 1913-1920

- **Y. BOYKOV et al.** Interactive graph cuts for optimal boundary & region segmentation of objects in nd images. *Proceedings of the Eighth International Conference On Computer Vision (ICCV-01),* 2001, vol. 1, 105-112
- **P.F. FELZENSZWALB et al.** Efficient graph-based image segmentation. *Int. J. Comput. Vis.,* 2004, vol. 59, 167-181
- **BLAKE et al.** Interactive image segmentation using an adaptive gmmrf model. *European Conference on Computer Vision (ECCV),* 2004, 428-441

21